# EUROPÄISCHE PATENTSCHRIFT

(11) **EP 1 672 954 B1**
(45) Veröffentlichungstag und Bekanntmachung des Hinweises auf die Patenterteilung: **28.07.2010**
(21) Anmeldenummer: 05077742.4
(22) Anmeldetag: 30.11.2005
(51) Int. Cl.: H04Q 9/00, G01D 4/00, G08C 17/02

(54) **Vorrichtung und Verfahren zum Erfassen von Zählerständen**
Device and method for recording meter readings
Dispositif et procédé destiné à la saisie d'affichages de compteurs

(30) Priorität: 20.12.2004 DE 102004062157
(43) Veröffentlichungstag der Anmeldung: 21.06.2006
(73) Patentinhaber: EMH Elektrizitätszähler GmbH & Co KG, 19243 Wittenburg (DE)
(72) Erfinder: Guderjahn, Thomas, 34266 Niestetal (DE)
(74) Vertreter: Hauck Patent- und Rechtsanwälte

(56) Entgegenhaltungen:
- EP-A- 0 903 953
- EP-A- 1 263 167
- WO-A-01/87279
- US-A1- 2005 055 432

## Beschreibung

Die vorliegende Erfindung betrifft eine Vorrichtung und ein Verfahren zum Erfassen von Zählerständen und zur Kommunikation sowie zum Austausch von Daten mit Zählern. Unter Zählern werden nachfolgend Elektrizitätszähler, Wasser-, Wärme- und auch Gaszähler verstanden, aber auch andere Zähler. Bisher werden Zähler, insbesondere Zähler in Haushalten überwiegend manuell abgelesen, was zeit- und kostenintensiv ist. Auch kann bei einem manuellen Ablesen nicht immer zu einem vorbestimmten Zeitpunkt abgelesen werden, sondern die Ablesezeitpunkte können stark variieren.

Es ist bekannt, Zähler mit einer Funkeinheit auszustatten, um eine Zählerstandübermittlung über eine kurze Funkstrecke vorzunehmen. Hierbei befindet sich beispielsweise eine mit dem Ablesen beauftragte Person mit einem mobilen Datensammler in der Funkreichweite der Zähler, so daß ähnliche Nachteile wie bei der manuellen Ablesung auftreten. Bei diesem Vorgehen senden die Zähler automatisch an den mobilen Datensammler oder an einen Datenkonzentrator, beispielsweise für eine Heizkostenabrechnung.

Aus DE 100 59 868 A1 ist ein Verfahren zur Übertragung von Daten bekannt. Dabei kommunizieren die Funkeinheiten von Endgeräten, beispielsweise Energieverbrauchszählern, immer mit zentralen Funkeinheiten, welche beispielsweise jeweils einer Wohneinheit und den zugehörigen Endgeräten zugeordnet sind. Um eine Kommunikation mit einem Endgerät, das von der zugehörigen zentralen Funkeinheit aus nicht direkt erreichbar ist, zu ermöglichen, kann eine zweite, einer anderen Wohneinheit zugeordnete zentrale Funkeinheit einbezogen werden. Diese tritt dann in unmittelbare Verbindung mit dem Endgerät und leitet die Daten an die erste zentrale Funkeinheit weiter.

Ebenfalls bekannt ist ein Verfahren zum Erfassen von Zählerständen aus DE 197 41 085 C2. Bei diesem bekannten Verfahren besitzt jeder Zähler eine eindeutige Kennung und ist mit einer Funkeinheit verbunden. Außerdem gibt es einen zentralen Datensammler, der mit den Funkeinheiten der Zähler unmittelbar und auch mittelbar über weitere Funkeinheiten Daten austauschen kann. Die Abfrage der Daten eines bestimmten Zählers erfolgt bei diesem bekannten Verfahren ausgehend vom Datensammler nach dem "Schneeballprinzip", d. h., die Anfrage wird zunächst an alle unmittelbar erreichbaren Funkeinheiten gerichtet und dann in einer Kette von diesen solange an alle von diesen Funkeinheiten aus erreichbaren weiteren Funkeinheiten weitergeleitet, bis die Funkeinheit des abzufragenden Zählers erreicht ist.

Aus Druckschrift WO 01/87279 A2 ist eine selbstorganisierende Netzwerkarchitektur zur Ablesung von Zählerständen bekannt. Die Architektur umfasst einen zentralen Server, der über eine Netzwerkverbindung mit Datensammlern Daten austauschen kann. Die Datensammler und die die Datensammler umgebenden Zähler weisen Funkeinheiten auf und bilden ein lokales Netzwerk. Im zentralen Server und in den Datensammlern sind Routing-Daten hinterlegt, die zu jedem Zähler einen Pfad angeben. Der Pfad kann von einem Datensammler direkt zu einem Zähler oder über einen oder mehrere weitere Zähler als Zwischenstationen verlaufen.
Aus der Druckschrift EP 1 263 167 A1 ist ein drahtloses Haus-Automatisierungssystem bekannt. Das System hat eine Steuerung zur Steuerung unterschiedlicher, an das System angeschlossene Geräte, etwa Lichtschalter oder sonstige elektrische Haushaltsgeräte. Die Kommunikation zwischen der Steuerung und den angeschlossenen Geräten erfolgt per Funk, wobei die Steuerung ein bestimmtes Gerät unter Umständen über ein zwischengeschaltetes anderes Gerät erreicht, dass die an das bestimmte Geräte zu sendenden Daten weiterleitet. Die Steuerung enthält eine Liste von Geräten, die zu dem System gehören. Jedes Gerät des Systems kann auf Veranlassung der Steuerung hin ein sogenanntes Discovery-Signal gezielt an alle in der Geräteliste der Steuerung verzeichneten Geräte senden. Geräte, die ein an sie adressiertes Discovery-Signal empfangen, bestätigen den Erhalt des Signals.

Davon ausgehend liegt der Erfindung die Aufgabe zugrunde, eine Vorrichtung und ein Verfahren zum Erfassen von Zählerständen bereitzustellen, die bzw. das mit einfachen Mitteln die Möglichkeit bieten, eine Vielzahl von Zählern abzulesen, mit diesen Daten in effizienter Weise auszutauschen und weitere Zähler zu integrieren.

Die vorstehende Aufgabe wird durch die Vorrichtung gemäß Anspruch 1 und das Verfahren gemäß Anspruch 4 gelöst. Vorteilhafte Ausgestaltungen bilden die Gegenstände der Unteransprüche.

Die erfindungsgemäße Vorrichtung zum Erfassen von Zählerständen und zur Kommunikation sowie Austausch von Daten ist für mindestens einen Zähler vorgesehen, der eine eindeutige Kennung besitzt und mit einer Funkeinheit verbunden ist. Die Funkeinheit ist vorgesehen, um Funksignale zu senden und zu empfangen. Sie arbeitet bevorzugt in einem sogenannten ISM-Band bei 868 MHz. Die Vorrichtung weist zusätzlich mindestens einen Datensammler auf, der ebenfalls eine Funkeinheit besitzt, die über eine Funkstrecke den Zählerstand und Daten von mindestens einem Zähler empfängt und Daten sendet, und der eine Steuerung aufweist, die den empfangenen Zählerstand weiterleitet. Der Datensammler empfängt den oder die Zählerstände sowie sonstige Daten von dem mindestens einen Zähler und leitet die so empfangenen Zählerstände weiter, beispielsweise an den übergeordneten Datensammler. Neben den Zählerständen werden von dem Datensammler auch allgemeine Daten mit dem Zähler ausgetauscht. Erfindungsgemäß besitzt der Datensammler eine Routingsteuerung. Die Routingsteuerung enthält Weginformationen, die für jeden Zähler in dem Funknetzwerk mindestens einen Weg aufweisen, über den von dem Datensammler an den Zähler Daten gesendet und Daten von dem Zähler empfangen werden können. Wobei die Weginformation entweder ein direktes Senden an den Empfänger vorsieht oder ein indirektes Senden über einen oder mehrere Zähler, die die gesendeten Daten entlang dem spezifizierten Weg weiterleiten. Die erfindungsgemäße Vorrichtung arbeitet mit einem Datensammler, bei dem auch Daten eingehen, die über eine Vielzahl von anderen, in der Weginformation für die Verbindung aufgeführten Zählern weitergeleitet wurden. Bei der erfindungsgemäßen Vorrichtung ist es nicht länger notwendig, sich mit dem Datensammler in dem oftmals kurzreichweitigen Empfangsradius eines Zählers mit Funksender zu befinden. Bei der erfindungsgemäßen Vorrichtung kann vielmehr mit einem stationären Datensammler gearbeitet werden, an den Daten über Weginformationen von den Zählern weitergeleitet werden. Besonders vorteilhaft hierbei ist, daß für die Funkeinheiten der Zähler keine aufwendige Steuerung erforderlich ist, sondern ein einfacher Mikro-Controller die Daten weiterleiten kann.

Durch die Routingsteuerung wird erreicht, daß zur Kommunikation des Datensammlers mit einem bestimmten Zähler die Daten nur entlang dem von der Routingsteuerung spezifizierten Weg weitergeleitet werden. Es sind folglich nur diejenigen Zähler an der Datenkommunikation beteiligt, die in diesem Weg inbegriffen sind. Der erforderliche Datenverkehr kann dadurch reduziert werden. Außerdem können mehrere Kommunikationsvorgänge zeitgleich ausgeführt werden.

Die erfindungsgemäße Vorrichtung reduziert den Aufwand für das Ablesen von Zählern erheblich.

Jede Funkeinheit; sowohl die des Datensammlers als auch die der Zähler, besitzt eine Steuerung, um auf einem empfangenen Rundruf eine Empfangsbestätigung mit einer Kennung zu senden. Eine definierte Signalfolge, die als Rundruf bezeichnet wird, kann von der Funkeinheit des Zählers oder des Datensammlers abgesetzt werden und löst bei den Empfängern des Rundrufs das Absetzen eines Gegensignals aus. Das Gegensignal ist eine Empfangsbestätigung, die dem Absender des Rundrufs den Empfang des Signals bestätigt und eine Kennung, bevorzugt auch Informationen über die Qualität, mitsendet. Die Qualität der Funkstrecke kann auch durch den Empfänger der Empfangsbestätigung bewertet werden. Die Empfangsbestätigungen geben dem Sender eines Rundrufs ein Abbild über vorhandene Empfänger in seinem Umfeld und bevorzugt auch über die Qualität der Funkstrecke, wie beispielsweise über die Empfangsfeldstärke der Signale und/oder deren Bit-Fehlerrate.

Um ein Funknetzwerk aufzubauen, das über Wege verfügt, die Zähler als Zwischenpunkte enthalten, besitzt jede der Funkeinheiten eine Steuerung, die auf ein durch den Datensammler ausgelöstes Startsignal hin anspricht, einen Rundruf auslöst und die empfangenen Daten des Rundrufs an den Datensammler zurücksendet. Auf diese Weise kann ein Datensammler eine Netzabbildung aufbauen, die über die Reichweite der Funkeinheit des Datensammlers hinausgeht. Die Verwendung von Steuerungen für Start- und Rundrufsignal erlaubt es, auch unter schwierigsten Funkbedingungen Signale von den Zählern über weite Strecken zu dem Datensammler zu senden.

In einer möglichen Ausgestaltung der Vorrichtung können zur Unterstützung des Netzwerks am vorbestimmten Ort auch eine oder mehrere Funkeinheiten zum Weiterleiten der Daten vorgesehen sein.

Die erfindungsgemäße Aufgabe wird ebenfalls durch ein Verfahren mit den Merkmalen aus Anspruch 4 gelöst.

Das erfindungsgemäße Verfahren dient zum Erfassen und Datenaustausch von Zählerständen bei mindestens einem Zähler, der eine eindeutige Kennung besitzt und mit einer Funkeinheit verbunden ist. Das Verfahren weist den Schritt auf, daß ein Datensammler mit einer Funkeinheit über ein Funknetzwerk Daten mit mindestens einem Zähler austauscht und/oder an diesen weiterleitet. Der Datensammler besitzt eine das Netz abbildende Routingsteuerung, in der jedem Zähler ein Weg zugeordnet ist, über den der Datensammler Daten an den Zähler sendet. Der Weg besteht entweder aus einem direkten Senden an den Zähler oder einem indirekten Senden über andere Zähler, die die gesendeten Daten entlang einem spezifizierten Weg weiterleiten. Die erfindungsgemäß vorgesehene Routingsteuerung zur Abbildung des Netzes erlaubt es dem Datensammler, auch Daten von Zählern auszuwerten, die nicht direkt an den Datensammler senden können. Die Routingsteuerung des Datensammlers ordnet jedem Zähler einen Weg zu, über den die Daten an den Zähler gesendet werden. Bevorzugt besitzen die Zähler keine Steuerung, die für Daten einen Weg zu dem Datensammler auswählt. Zweckmäßiger werden Weginformationen mit den Daten von dem Datensammler an die Zähler übermittelt und von der Steuerung für das Senden von Daten an den Datensammler zurück verwendet. Entlang einem Weg mit einer oder mehreren Zwischenstationen funktionieren die Zähler, die den Knotenpunkten des Weges zugeordnet sind als Zwischenstation über die die Daten weitergeleitet werden.

Gemäß einer Ausgestaltung enthalten die Daten in einem Abschnitt, den sogenannten Header, Informationen über den von der Routingsteuerung vorherbestimmten Weg, entlang dem die Daten weitergeleitet werden sollen.

Diese Informationen können beispielsweise die Form einer Liste haben, die der Reihe nach die Kennungen aller Zähler entlang dem Weg beinhaltet. Der erste Eintrag in dieser Liste bezeichnet den für den bevorstehenden Weiterleitungsschritt zuständigen Zähler. Dieser Zähler kann die Liste im Header vor der Weiterleitung so umsortieren, daß die Kennung des nächsten Zählers an erster Stelle der Liste steht. Die Kennung des umsortierenden Zählers selbst wird an das Ende der Liste gestellt. Auf diese Weise bleibt die den Weg spezifizierende Liste in der richtigen Abfolge erhalten und kann gegebenenfalls auch für den "Rückweg" der Daten verwendet werden.

Bei dem erfindungsgemäßen Verfahren besitzt jede Funkeinheit eine Steuerung, um auf einen empfangenen Rundruf eine Empfangsbestätigung mit einer Kennung des zugehörigen Zählers, der den Rundruf empfangen hat, zu senden. Bevorzugt enthält die Empfangsbestätigung auch Angaben zur Stärke und Qualität des empfangenen Rundrufsignals.

Um dynamisch ein Netzwerk aufzubauen, besitzt jede Steuerung der Funkeinheit die Möglichkeit, eine Aufforderung zum Rundruf zu senden. Auf die Aufforderung des Datensammlers ansprechend generiert die Steuerung der Funkeinheit des Datensammlers ein Rundrufsignal und erhält die auf das Rundrufsignal hin erhaltenen Empfangsbestätigungen zurück. Die so erreichten Zähler sind über die Weglänge 1 erreichbar. Um mit Funkeinheiten begrenzter Reichweite schrittweise ein großes Netzwerk aufzubauen, werden in einem zweiten Schritt, welcher anhand der zurückerhaltenen Empfangsbestätigungen der zurückgemeldeten Funkeinheiten aus dem ersten Schritt erfolgt, diese nacheinander mit einer Aufforderung vom Datensammler angesprochen. Auf die empfangene Aufforderung hin setzen diese Funkeinheiten einen Rundruf ab. Hierauf erhält der Datensammler die eingesammelten und weitergeleiteten Empfangsbestätigungen aller Funkeinheiten zurück, die über einen Weg mit der Länge 2 oder weniger erreichbar sind. Beim nächsten Schritt können nun die Funkeinheiten mit einem Abstand der Länge 2, also mit einer Zwischenstation, mit einem Startsignal angesprochen werden, um aus den Rückmeldungen eine Liste der Funkeinheiten mit der Länge 3 zu generieren. Das Besondere bei dem sich so aufbauenden Netzwerk ist, daß Zähler, die außerhalb der Reichweite des Datensammlers liegen und unmittelbar durch diesen nicht erreichbar sind, durch das Weiterleiten der Daten über benachbarte Zähler erreicht werden können.

Weiterhin können auch weitere Zähler sehr einfach in das Netzwerk integriert werden, weil jeder innerhalb eines bestehenden Netzwerkes hinzugefügte weitere Zähler auf einen entsprechenden Rundruf reagiert und automatisch in das Netzabbild der Routingsteuerung aufgenommen werden kann.

Bei dem erfindungsgemäßen Verfahren ist es möglich, mehrere Netzwerke parallel in einem Versorgungsgebiet zu betreiben. Um in den sich so bildenden und wachsenden Netzwerken ein doppeltes Erfassen von Zählern zu vermeiden, ist vorgesehen, jedem Zähler genau einen Datensammler zuzuordnen. Der Zähler kann somit auch bei weitergeleiteten Signalen erkennen, ob er für diese zuständig ist.

Ein bevorzugtes Ausführungsbeispiel wird nachfolgend anhand der Figuren näher erläutert. Es zeigt:
- Fig. 1: einen stationären Datensammler in Funkverbindung mit einem Zähler,
- Fig. 2: mögliche Empfangsweiten, die sich ausgehend von zwei Rundrufsignalen bilden,
- Fig. 3: zeigt beispielhaft unterschiedliche Unternetzwerke zu einem stationären Datensammler.

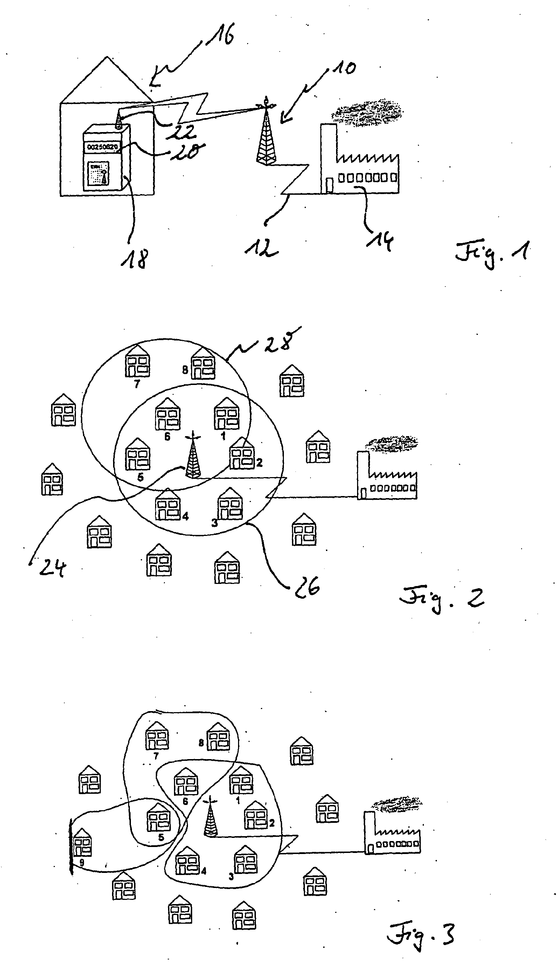

Fig. 1 zeigt in einer schematischen Ansicht einen stationären Datensammler 10, der über eine Datenleitung 12 mit einem Abrechnungsunternehmen 14 verbunden ist. Der Verbraucher 16 - hier dargestellt als ein Wohnhaus - ist mit einem Elektrizitätszähler 18 ausgestattet. Der Elektrizitätszähler 18 besitzt eine eindeutige Kennung 20 und eine Funktransceiver 22. Die Kennung 20 kann entweder eine direkt dem Zähler 18 zugeordnete Kennung sein oder eine indirekte über eine Kennung des Funktransceivers 22 selbstbestimmende Kennung sein. Der Funktransceiver 22 ist als ein in den Zähler zu integrierendes Modul ausgebildet. Es ist auch möglich, den Funktransceiver als Modul über Kabel oder dergleichen mit seinem Zähler zu verbinden. Der Transceiver 22 ist in dem in Fig. 1 dargestellten Beispiel ausgelegt, um direkten Funkkontakt mit dem Datensammler 10 aufzunehmen. Der in Fig. 1 schematisch dargestellte Aufbau bildet ein Netzwerk mit einem Zähler 18, dessen Zählerstände über Funk ausgelesen und mit dem kommuniziert werden kann.

| DATENSAMMLER | | |
|---|---|---|
| Aktive Wege: | | |
| Ziel | Weg | RSSI |
| Zähler 1 | Datensammler | -30 dBm |

In der vorstehenden, sehr einfachen Weginformation, ist angegeben, daß der Zähler 1, in Fig. 1 mit dem Bezugszeichen 18 versehen, in direkter Verbindung mit dem Datensammler 10 steht. Die Empfangsfeldstärke beträgt in dem Beispiel-30 dBm.

Nachfolgend wird beschrieben, wie in aufeinanderfolgenden Schritten die Weginformation für ein komplexes Netzwerk automatisch generiert wird. Der Datensammler strukturiert, regelmäßig oder ansprechend auf einen Befehl, die Weginformationen zu einer Vielzahl von Zählern. Dies erfolgt, um in einem Netzwerk zu kommunizieren oder es aufzubauen, zu erweitern, anzupassen oder dergleichen. Fig. 2 zeigt einen Datensammler 24, der in einem ersten Schritt einen Rundruf an alle Zähler in seinem Empfangsgebiet sendet. Zur besseren Übersicht sei angenommen, daß der Datensammler 24 ein im wesentlichen kreisförmiges Empfangsgebiet besitzt, in dem die Zähler 1, 2, 3, 4, 5 und 6 liegen. Die einzelnen Zähler 1-6 setzen auf den empfangenen Rundruf hin eine Empfangsbestätigung ab, mit der der Datensammler 24 die folgende Weginformation aufbaut:

| DATENSAMMLER | | |
|---|---|---|
| AktiveWege: | | |
| Ziel | Weg | RSSI |
| Zähler 1 | Datensammler | -30 dBm |
| Zähler 2 | Datensammler | -33 dBm |
| Zähler 3 | Datensammler | -27 dBm |
| Zähler 4 | Datensammler | -80 dBm |
| Zähler 5 | Datensammler | -110 dBm |
| Zähler 6 | Datensammler | -40 dBm |

Deutlich zu erkennen ist, daß in dem vorstehenden Beispiel Zähler 5 eine besonders schlechte Funkverbindung zum Datensammler 24 besitzt.

In einem nachfolgenden Schritt wird nacheinander an die Zähler 1-6 vom Datensammler ein Startsignal gesendet, das bei dem jeweiligen Sender das Absetzen eines Rundrufs auslöst. Beispielsweise wird an Zähler 6 ein solches Startsignal gesendet, worauf dieser einen Rundruf absetzt, der durch die empfangenen Zähler mit einer Empfangsbestätigung beantwortet wird. In dem dargestellten Beispiel in Fig. 1 zeigt der Kreis 28 die Reichweite des Zählers 6 an. Somit fallen also Zähler 1, 5, 7, 8 und der Datensammler 24 in die Reichweite des Zählers 6. Aus den Empfangsbestätigungen generiert der Zähler 6 die folgende Weginformation:

| Zähler Nr. 6 | | |
|---|---|---|
| AktiveWege: | | |
| Ziel | Weg | RSSI |
| Datensammler | Zähler 6 | -40 dBm |
| Zähler 1 | Zähler 6 | -32 dBm |
| Zähler 5 | Zähler 6 | -30 dBm |
| Zähler 7 | Zähler 6 | -61 dBm |
| Zähler 8 | Zähler 6 | -53 dBm |

In dem Beispiel wird sichtbar, daß der Zähler 5 einen guten Funkkontakt mit Zähler 6 hat und von diesem besser empfangen wird als vom Datensammler 24. Eine solche Verschlechterung kann beispielsweise durch ein Gebäude oder eine sonstige Abschirmung der Funkstrecke erfolgen.

Beim nachfolgenden Schritt sendet der Zähler 6 die Weginformation an den Datensammler 24. In einem nächsten Schritt wertet der Datensammler die in Antwort auf sein Startsignal erhaltenen Informationen der einzelnen Zähler 1-6 aus und generiert hieraus eine neue Weginformation. Für das vorstehende Beispiel ergibt sich dann die folgende Weginformation:

| Datensammler | | |
|---|---|---|
| AktiveWege: | | |
| Ziel | Weg | RSSI |
| Zähler 1 | Datensammler | -30 dBm |
| Zähler 2 | Datensammler | -33 dBm |
| Zähler 3 | Datensammler | -27 dBm |
| Zähler 4 | Datensammler | -80 dBm |
| Zähler 5 | Zähler 6 | -30 dBm |
| Zähler 6 | Datensammler | -40 dBm |
| Zähler 7 | Zähler 6 | -61 dBm |
| Zähler 8 | Zähler 6 | -53 dBm |
| | | |

| Alternative Wege: | | |
|---|---|---|
| Zähler 5 | Datensammler | -110 dBm |

Deutlich zu erkennen an der Weginformation des Datensammlers ist, daß der Zähler Nr. 6 hier als weiterleitender Zähler (Repeater) im Netzwerk eingesetzt wird. Zähler 5, 7, 8 werden nicht direkt von dem Datensammler angesprochen, sondern Signale und Befehle an diese Zähler werden über den Zähler 6 angesprochen. Zusätzlich ist automatisch in der generierten Netzabbildung enthalten, daß für den Zähler 5, der auch direkt von dem Datensammler erreichbar war, ein alternativer inaktiver Weg abgelegt ist. Der alternative inaktive Weg hat eine schlechtere Übertragungsqualität und wird eingesetzt, falls der aktive Weg nicht funktioniert. Die Summe der Weginformationen ergibt ein Netzabbild, das der Routingsteuerung als Grundlage zur Adressierung der Daten dient. Fig. 3 zeigt die Erweiterung des Netzes, nachdem ein Startsignal an Zähler 5 gesendet wurde. In dem Beispiel sei der Zähler 9 über den Zähler 5 erreichbar, so daß sich als Weg hier ergibt:
Datensammler → Zahler 6 → Zähler 5 → Zähler 9.

Diese Weginformation wird den zu sendenden Datenpaketen in dem Funknetz vorangestellt, so daß jeder Zähler nach dem Empfang eines Datenpakets analysieren kann, ob der Inhalt des Datenpakets durch seine Steuerung auszuwerten oder ob das Datenpaket weiterzuleiten ist. Schematisch besitzt das Datenpaket den folgenden Aufbau:

| | | |
|---|---|---|
| Weginformation | Nutzdaten | Prüfsumme |

Weginformationen sind die oben beschriebenen Wege, wobei hier die eindeutige Kennung der Zähler im Netz verwendet wird. Nutzdaten sind bevorzugt Steuerbefehle oder ausgelesene Zählerstände. Die Prüfsumme erlaubt es, Fehler bei der Übertragung des Datenpaket zu erkennen und bei geringfügigen Fehlern diese auch zu berichtigen.

Um auch in komplexen Netzwerken mit mehreren Datensammlern arbeiten zu können, ist vorgesehen, daß die Zähler eindeutig einem Datensammler zugeordnet werden. Der Datensammler, der den Zähler in sein Netzabbild aufgenommen hat, sendet an diesen Zähler einen Zuordnungsbefehl (LOCK TO COLLECTOR), der bewirkt, daß der Zähler fest dem Datensammler zugeordnet wird. Um hier ausreichend Sicherheit zu haben, bestätigt der Zähler dem Datensammler seine Zuordnung.

Für die Funkverbindung wird bevorzugt das ISM Band bei 868 MHz gewählt.

Soll ein neuer Zähler in dem Netzwerk installiert werden, so gibt es grundsätzlich zwei Möglichkeiten. In einer ersten Möglichkeit wird der Zähler dynamisch bei einem erneuten, automatischen Netzaufbau durch den Datensammler integriert. In einer zweiten Möglichkeit kann der erneute Netzaufbau durch einen Service nur an dem Datensammler gestartet werden. Um zu verhindern, daß der Zähler sich am falschen Datensammler anmeldet, kann ihm durch einen Befehl ein Datensammler zugeordnet werden.

## Patentansprüche

1. Vorrichtung zur Kommunikation mit und zum Erfassen von Zählerständen von mindestens einem Zähler, die einen Zähler, der eine eindeutige Kennung (20) besitzt und mit einer Funkeinheit (22) verbunden ist, und einen Datensammler (10; 24) aufweist, der eine Funkeinheit besitzt, die zum Empfang von Daten über ein Funknetzwerk von dem mindestens einen Zähler (18) ausgebildet ist, wobei der Datensammler Daten über eine Steuerung weiterleiten und/oder speichern kann, wobei der Datensammler eine Routingsteuerung aufweist, die dem mindestens einen Zähler in dem Funknetzwerk mindestens einen Weg zuweisen kann, über den Daten zwischen Zähler und Datensammler gesendet werden können, wobei der Weg entweder ein direktes Senden vorsieht oder ein indirektes Senden an andere Zähler, die die gesendeten Daten entlang dem Weg weiterleiten, wobei jede Funkeinheit eine Steuerung besitzt, **dadurch gekennzeichnet, dass** jede Funkeinheit einen aus einer definierten Signalfolge bestehenden Rundruf absenden kann, und alle Funkeinheiten dazu ausgebildet sind, auf einen empfangenen Rundruf hin eine Empfangsbestätigung mit ihrer jeweiligen Kennung zu senden.

2. Vorrichtung nach Anspruch 1, **dadurch gekennzeichnet, daß** die Empfangsbestätigung Angaben zur Qualität des empfangenen Funksignals des Rundrufs enthält.

3. Vorrichtung nach Anspruch 1 oder 2, **dadurch gekennzeichnet, daß** die Steuerung der Funkeinheit dazu ausgebildet ist, auf ein Startsignal hin ein Rundrufsignal zu senden und die erhaltenen Empfangsbestätigungen an den Sender des Startsignals zu senden.

4. Verfahren zur Kommunikation mit und zum Erfassen von Daten von mindestens einem Zähler, der eine eindeutige Kennung besitzt und mit einer Funkeinheit verbunden ist, mit den folgenden Schritten:
- ein Datensammler mit einer Funkeinheit empfängt über ein Funknetz Daten von dem mindestens einen Zähler und leitet die Daten weiter und/oder speichert diese,
- wobei der Datensammler eine Routingsteuerung aufweist, in der mindestens ein Weg abgelegt ist, über den Daten zwischen dem mindestens einen Zähler und dem Datensammler gesendet werden, wobei der Weg entweder ein direktes Senden oder ein indirektes Senden über andere Zähler vorsieht, die die empfangenen Daten entlang dem Weg weiterleiten, und wobei
jede Funkeinheit eine Steuerung aufweist, **dadurch gekennzeichnet, dass** eine Funkeinheit einen aus einer definierten Signalfolge bestehenden Rundruf aussendet, auf den ansprechend die Steuerung jeder den Rundruf empfangenden Funkeinheit eine Empfangsbestätigung mit seiner jeweiligen Kennung sendet.

5. Verfahren nach Anspruch 4, **dadurch gekennzeichnet, daß** die Empfangsbestätigung ebenfalls Angaben über Qualität des empfangenen Funksignals für den Rundruf enthält.

6. Verfahren nach Anspruch 5 oder 4, **dadurch gekennzeichnet, daß** die Funkeinheit ansprechend auf ein empfangenes Startsignal einen Rundruf sendet und die empfangene Empfangsbestätigung an den Sender des Startsignals weiterleitet:

7. Verfahren nach Anspruch 6, **dadurch gekennzeichnet, daß** der Datensammler nach einem Rundruf an jeden Zähler eine Aufforderung sendet und auf den zurückerhaltenen Empfangsbestätigungen die Routingsteuerung ändert, wobei dem Zähler ganz oder teilweise neue Wege zugewiesen werden.

8. Verfahren nach Anspruch 7, **dadurch gekennzeichnet, daß** der Datensammler an jeden Zähler ein Startsignal sendet und anhand der erhaltenen Empfangsbestätigungen die Routingsteuerung ändert.

9. Verfahren nach einem der Ansprüche 4 bis 8, **dadurch gekennzeichnet, daß** jeder Zähler automatisch oder manuell einem Datensammler zugeordnet ist und daß jeder Zähler Daten nur an einen zugeordneten Datensammler weiterleitet.

## Claims

1. An apparatus for the communication with and for recording meter readings of at least one meter, said apparatus having a meter which has an unambiguous identification key (20) and is connected to a radio unit (22) as well as a data collector (10; 24) that has a radio unit which is adapted for receiving data from the at least one meter (18) via a radio network, wherein the data collector can forward and/or memorise data via a control device, wherein the data collector has a routing control which can assign at least one path via which data can be sent between meter and data collector to the at least one meter in the radio network, the path providing either direct sending or indirect sending to other meters which forward the sent data along the path, each radio unit having a control device, **characterised in that** each radio unit can emit a broadcast consisting of a defined signal sequence, and all the radio units are adapted to send an acknowledgement of receipt with their respective identification key as a response after a received broadcast.

2. An apparatus according to claim 1, **characterised in that** the acknowledgement of receipt contains information regarding the quality of the received radio signal of the broadcast.

3. An apparatus according to claim 1 or 2, **characterised in that** the control device of the radio unit is adapted to send a broadcast signal as a response after a starting signal, and to send the received acknowledgements of receipt to the sender of the starting signal.

4. A method for the communication with and for recording data of at least one meter which has an unambiguous identification key and is connected to a radio unit, with the following steps:
• a data collector with a radio unit receives data from the at least one meter via a radio network, and forwards the data and/or memorises the same,
• wherein the data collector features a routing control in which at least one path is deposited via which the data are sent between the at least one meter and the data collector, the path providing either direct sending or indirect sending via other meters that forward the received data along the path, and wherein
• each radio unit has a control device, **characterised in that** one radio unit emits a broadcast consisting of a defined signal sequence, in response to which the control device of each radio unit receiving the broadcast sends an acknowledgement of receipt with its respective identification key.

5. A method according to claim 4, **characterised in that** the acknowledgement of receipt also contains information regarding the quality of the received radio signal for the broadcast.

6. A method according to claim 5 or 6, **characterised in that** the radio unit sends a broadcast in response to a received starting signal, and forwards the received acknowledgement of receipt to the sender of the starting signal.

7. A method according to claim 6, **characterised in that** the data collector sends a request to each meter after every broadcast, and changes the routing control on the acknowledgements of receipt which it received in turn, wherein entirely or partially new paths are assigned to the meter.

8. A method according to claim 7, **characterised in that** the data collector sends a starting signal to each meter and changes the routing control with the help of the received acknowledgements of receipt.

9. A method according to any one of claims 4 to 8, **characterised in that** each meter is automatically or manually assigned to one data collector, and that each meter forwards data to an assigned data collector only.

## Revendications

1. Dispositif pour la communication avec et pour saisir des affichages de compteur d'au moins un compteur électrique, ledit dispositif ayant un compteur électrique qui a un indicatif (20) univoque et est relié à une unité de radio (22), et présentant un collecteur de données (10; 24) qui a une unité de radio adaptée pour recevoir des données de l'au moins un compteur électrique (18) au travers d'un réseau radio, dans lequel le collecteur de données peut transférer et/ou mémoriser des données au travers d'un dispositif de commande, le collecteur de données ayant une commande de routage qui peut attribuer à l'au moins un compteur électrique dans le réseau radio au moins un chemin au travers duquel des données peuvent être émis entre le compteur électrique et le collecteur de données, le chemin prévoyant ou une émission directe ou une émission indirecte à d'autres compteurs électriques qui transfèrent les données émises le long du chemin, chaque unité de radio ayant un dispositif de commande, **caractérisé en ce que** chaque unité de radio peut émettre une diffusion consistant d'une séquence définie de signaux, et tous les unités de radio sont adaptées à émettre un accusé de réception avec leur indicatif correspondant après une diffusion reçue.

2. Dispositif selon la revendication 1, **caractérisé en ce que** l'accusé de réception contient des indications concernant la qualité du signal radio reçu de la diffusion.

3. Dispositif selon la revendication 1 ou 2, **caractérisé en ce que** le dispositif de commande de l'unité de radio est adapté à émettre un signal de diffusion comme une réponse après un signal de mise en marche, et à émettre les accusés de réception reçus à l'émetteur du signal de mise en marche.

4. Procédé pour la communication avec et pour saisir des données d'au moins un compteur électrique qui a un indicatif univoque et est relié à une unité de radio, avec les étapes suivantes:
• un collecteur de données avec une unité de radio reçoit des données de l'au moins un compteur électrique au travers d'un réseau radio, et transfère et/ou mémorise les données,
• le collecteur de données ayant une commande de routage, dans laquelle au moins un chemin est déposé au travers duquel les données sont émis entre l'au moins un compteur électrique et le collecteur de données, le chemin prévoyant ou une émission directe ou une émission indirecte au travers d'autres compteurs électriques qui transfèrent les données reçues le long du chemin, et dans lequel
• chaque unité de radio a un dispositif de commande, **caractérisé en ce que** une unité de radio émet une diffusion consistant d'une séquence définie de signaux, en réagissant à laquelle le dispositif de commande de chaque unité de radio recevant la diffusion émet un accusé de réception avec son indicatif correspondant.

5. Procédé selon la revendication 4, **caractérisé en ce que** l'accusé de réception contient aussi des indications concernant la qualité du signal radio reçu pour la diffusion.

6. Procédé selon la revendication 5 or 6, **caractérisé en ce que** l'unité de radio émet une diffusion réagissant à un signal de mise en marche reçu, et transfère l'accusé de réception reçu à l'émetteur du signal de mise en marche.

7. Procédé selon la revendication 6, **caractérisé en ce que** le collecteur de données émet un signal d'invitation à chaque compteur électrique après une diffusion, et change le commande de routage dans les accusés de réception reçus en retour, des chemins entièrement ou partiellement neufs étant attribués au compteur électrique.

8. Procédé selon la revendication 7, **caractérisé en ce que** le collecteur de données émet un signal de mise en marche à chaque compteur électrique et change la commande de routage à l'aide des accusés de réception reçus.

9. Procédé selon l'une quelconque des revendications daims 4 à 8, **caractérisé en ce que** chaque compteur électrique est attribué de façon manuelle ou automatique à un collecteur de données, et que chaque compteur électrique transfère des données uniquement à un seul collecteur de données attribué.
